# EUROPÄISCHE PATENTSCHRIFT

(11) **EP 3 237 679 B1**
(45) Veröffentlichungstag und Bekanntmachung des Hinweises auf die Patenterteilung: **21.12.2022**
(21) Anmeldenummer: 15775750.1
(22) Anmeldetag: 12.10.2015
(51) Int. Cl.: D21H 27/10, B32B 27/10, C09D 191/00, D21H 19/54, D21H 19/56, D21H 19/58, D21H 21/16

(54) **UMWELTFREUNDLICHES VERPACKUNGSPAPIER FÜR LEBENSMITTEL**
ENVIRONMENT-FRIENDLY PACKAGING PAPER FOR FOOD
PAPIER D'EMBALLAGE ÉCOLOGIQUE POUR DENRÉES ALIMENTAIRES

(30) Priorität: 23.12.2014 DE 102014119572
(43) Veröffentlichungstag der Anmeldung: 01.11.2017
(73) Patentinhaber: delfortgroup AG, 4050 Traun (AT)
(72) Erfinder: KINAST, Hannes, 4622 Eggendorf im Traunkreis (AT)
(74) Vertreter: Lucke, Andreas
(86) Internationale Anmeldenummer: PCT/EP2015/073543
(87) Internationale Veröffentlichungsnummer: WO 2016/102094

(56) Entgegenhaltungen:
- WO-A1-96/15321
- WO-A1-2008/014903
- WO-A1-2013/039986

## Beschreibung

### GEBIET DER ERFINDUNG

Die Erfindung betrifft ein Papier zur Verpackung von Lebensmitteln. Insbesondere betrifft sie ein Papier, das durch eine Beschichtung überwiegend biologischen Ursprungs einen ausreichenden Widerstand gegen das Durchdringen von Fetten, Ölen und Wasser aufweist und trotzdem gut recyclingfähig und toxikologisch unbedenklich ist.

### HINTERGRUND UND STAND DER TECHNIK

An Verpackungspapier für Lebensmittel werden viele verschiedene und zum Teil einander widersprechende Anforderungen gestellt. Eine erste Funktion des Verpackungspapiers besteht darin, dass es das verpackte Lebensmittel vor Umwelteinflüssen schützt. Dies erfordert zumindest eine gewisse mechanische Festigkeit und eine chemische Beständigkeit gegenüber typischen Umwelteinflüssen. Eine zweite Funktion besteht darin, dass das Verpackungspapier auch die Umwelt vor Einflüssen durch das verpackte Lebensmittel schützen soll, mit denen es möglicherweise in Kontakt kommt. Dies erfordert bei Lebensmitteln vor allem einen ausreichenden Widerstand gegen das Durchdringen von Fetten, Ölen und Wasser durch das Verpackungspapier. Zusätzlich soll das Verpackungspapier für Lebensmittel einen definierten Widerstand gegen das Durchdringen von Wasserdampf besitzen, um einerseits zu verhindern, dass das Lebensmittel zu schnell austrocknet und andererseits zu verhindern, dass, vor allem bei warmen Lebensmitteln, Wasserdampf innerhalb der Verpackung kondensiert und das Lebensmittel durchfeuchtet.

Eine weitere wichtige Eigenschaft ist eine gute Bedruckbarkeit des Verpackungspapiers, zumindest auf einer Seite, da viele Verpackungspapiere für Lebensmittel bedruckt werden, um das verpackte Lebensmittel und seine Herkunft identifizieren zu können, und um dem verpackten Lebensmittel ein attraktives Äußeres zu verleihen. Dies kann beispielsweise durch Flexodruck, Offsetdruck oder Tiefdruck geschehen. Wichtig ist auch, dass das Verpackungspapier nicht an dem verpackten Lebensmittel haftet und außerdem soll das Verpackungspapier noch plan liegen, eine angenehme Haptik, eine hohe Opazität und eine gute Faltbarkeit besitzen.

Da Verpackungspapier für Lebensmittel sehr oft nur einmal verwendet wird, ist es aus ökologischen Gründen sinnvoll, wenn das Verpackungspapier möglichst einfach wiederverwertet werden kann oder, falls es nicht ordnungsgemäß entsorgt wird, zumindest biologisch abgebaut werden kann.

Typischerweise widersprechen sich die Anforderungen eines hohen bzw. definierten Widerstands gegen das Durchdringen von Fetten, Ölen, Wasser und Wasserdampf und die gute Wiederverwertbarkeit oder biologische Abbaubarkeit.

Ein aus dem Stand der Technik bekanntes Verfahren für Verpackungspapiere, um einen sehr guten Widerstand gegen das Durchdringen von Fetten, Ölen und Wasser bzw. Wasserdampf zu erreichen, besteht darin, ein Basispapier einseitig mit Polyethylen, beispielsweise in einem Extrusionsverfahren, zu beschichten. Wegen dieser Beschichtung kann ein solches Papier aber nicht oder nur mit großem Aufwand als Altpapier wiederverwertet werden. Dieses Verfahren erfüllt daher die Anforderung einer Wiederverwertbarkeit oder biologischen Abbaubarkeit nur unzureichend.

Ein anderes aus dem Stand der Technik bekanntes Verfahren für Verpackungspapiere, um einen sehr guten Widerstand gegen das Durchdringen von Fetten, Ölen und Wasser zu erreichen, besteht darin, das Papier mit bestimmten fluorhaltigen Substanzen zu beschichten. Insbesondere polyfluorierte Tenside, und vor allem Fluortelomeralkohole, CF₃(CF₂)ₙCH₂CH₂OH mit n ungerade, haben sich für diese Anwendung bewährt. Beim Einsatz dieser Stoffe kann es aber zu einer Kontamination mit Perfluoroktansäure (PFOA, C₈HF₁₅O₂) kommen, die sich im menschlichen Organismus ansammelt und die durch die in der EU geltende REACH-Verordnung (*Registration, Evaluation, Authorisation of Chemicals*) als fortpflanzungsgefährdend, krebserregend und toxisch eingestuft ist. Schon alleine aus diesem Grund sind polyfluorierte Tenside als Bestandteil eines Verpackungspapiers nicht erwünscht und insbesondere nicht als Bestandteil eines Verpackungspapiers für Lebensmittel. Zusätzlich sind solche Papiere auch kaum wiederverwertbar.

Viele Versuche ein Verpackungspapier für Lebensmittel mit Substanzen überwiegend biologischen Ursprungs zu beschichten, so dass neben der guten Wiederverwertbarkeit oder biologischen Abbaubarkeit auch noch ein hoher Widerstand gegen das Durchdringen von Fetten, Ölen und Wasser erreicht wird, waren nicht erfolgreich, weil der hohe Widerstand gegen das Durchdringen von Fetten, Ölen und Wasser, den die Beschichtung mit Polyethylen oder der Einsatz von polyfluorierten Tensiden bietet, nicht annähernd erreicht werden konnte.

In anderen Versuchen einer Beschichtung des Verpackungspapiers mit erdölbasierten Wachsen konnte zwar ein hoher Widerstand gegen das Durchdringen von Fetten, Ölen und Wasser erreicht werden, aber die Anforderung einer guten Wiederverwertbarkeit oder biologischen Abbaubarkeit ist wieder nur unzureichend erfüllt. Zudem basieren diese Wachse sehr oft auf Erdölprodukten und sind daher schon aus diesem Grund ökologisch nachteilig.

Es besteht daher weiterhin ein großer Bedarf in der Industrie, diese beiden wesentlichen Anforderungen an ein Verpackungspapier für Lebensmittel noch besser miteinander zu vereinen.

Die WO 96/15321 offenbart ein Verpackungsmaterial welches sich leicht bedrucken lässt. Offenbart ist ein Papier mit einem Flächengewicht von 50 g/m² welches mit einer Beschichtung mit einem Flächengewicht von 14 g/m² beschichtet ist. Die Beschichtung enthält ein Bindemittel und ein Pigment, wobei das Pigment zu 90 Gew.-% Kaolin und zu 10 Gew.-% aus Titandioxid besteht. Das Papier hat auf seiner behandelten Seite einen Cobb 60 Wert von 13 g/m². Als andere mögliche Pigmente werden Calciumcarbonat, Talkum, und Aluminiumsilikat genannt. Mögliche Flächengewichte liegen zwischen 20 g/m² und 120 g/m², wobei der bevorzugte Bereich zwischen 40 g/m² und 70 g/m² liegt.

Die WO 2013/039986 offenbart mineralische Zusammensetzungen, die ein Mineral umfassen, welches mit einem styrolbasierten Polymer behandelt ist. Das so behandelte Mineral kann verwendet werden, um den Cobb-Wert eines Papierprodukts zu verringern.

### ZUSAMMENFASSUNG DER ERFINDUNG

Der vorliegenden Erfindung liegt die Aufgabe zugrunde, ein Verpackungspapier für Lebensmittel anzugeben, das einerseits einen ausreichend hohen Widerstand gegen das Durchdringen von Fetten, Ölen und Wasser bietet und andererseits gut wiederverwertet oder biologisch abgebaut werden kann.

Diese Aufgabe wird durch ein Verpackungspapier nach Anspruch 1 sowie durch dessen Verwendung nach Anspruch 15 gelöst. Vorteilhafte Weiterbildungen sind in den abhängigen Ansprüchen angegeben.

Das erfindungsgemäße Verpackungspapier hat ein Flächengewicht von 20 g/m² bis 40 g/m², umfasst Füllstoff zu einem Anteil von weniger als 20 Gew.-% bezogen auf das Gewicht des unbeschichteten Papiers und weist auf zumindest einer Seite eine Beschichtung auf, die ein in ein Polymer verkapseltes pflanzliches Öl, sowie Talkum und mindestens ein Bindemittel umfasst, wobei beide Seiten des fertigen Verpackungspapiers einen Cobb 60 Wert von 14 g/m² bis 22 g/m² aufweisen.

Der Erfinder hat überraschend gefunden, dass trotz des geringen Flächengewichts des Verpackungspapiers eine Beschichtung mit einem in ein Polymer verkapselten pflanzlichen Öl, sowie Talkum und mindestens einem Bindemittel ausreichend ist, um den erforderlichen hohen Widerstand gegen das Durchdringen von Fetten, Ölen und Wasser zu erreichen, sofern diese Beschichtung mit einem Basispapier mit dem genannten, vergleichsweise geringen Füllstoffgehalt und einem geeigneten Leimungsgrad kombiniert wird, der sich in dem genannten Cobb 60 Wert manifestiert. In dem erfindungsgemäßen Papier sorgt der geringe Füllstoffgehalt für eine vergleichsweise geringe Porosität bzw. dichte Papierstruktur, die für den erwünschten Effekt des Verpackungspapiers von entscheidender Bedeutung ist. Der angegebene Leimungsgrad gewährleistet unter anderem, dass die Beschichtung nur unwesentlich in die Porenstruktur des Papiers eindringt und sich stattdessen vor allem auf der Oberfläche des Papiers befindet und dort die gewünschte Wirkung entfaltet. Dies reduziert im Übrigen auch die erforderliche Menge an Beschichtungsmaterial.

Das erfindungsgemäße Verpackungspapier verwendet somit eine Beschichtung, die überwiegend aus Materialien biologischen Ursprungs besteht und den biologischen Abbau des benutzten Verpackungspapiers erleichtert. Hinzu kommt, dass das erfindungsgemäße Verpackungspapier über ein vergleichsweise geringes Flächengewicht verfügt und schon daher ein mögliches Abfallaufkommen entsprechend verringert. Gleichwohl ermöglicht das Verpackungspapier einen ausreichend hohen Widerstand gegen das Durchdringen von Fetten, Ölen und Wasser sowie einen geeigneten Widerstand für Wasserdampf, der hoch genug ist, um das Lebensmittel "frisch" zu halten, d.h. ein übermäßig schnelles Austrocknen zu vermeiden, gleichzeitig aber gering genug ist, um ein Durchfeuchten des Lebensmittels, vor allem bei warmen Lebensmitteln, teilweise oder ganz zu vermeiden. Ermöglicht wird dies im Rahmen der Erfindung dadurch, dass das Basispapier in der beschriebenen Weise speziell im Hinblick auf das Zusammenwirken mit der Beschichtung ausgelegt ist.

Die Leimung und das verkapselte pflanzliche Öl erzeugen dabei im Wesentlichen eine Barriere gegen Wasser und Wasserdampf, während die aufgrund des geringen Füllstoffgehalts dichte Papierstruktur und die Verwendung von Talkum als Bestandteil der Beschichtung eine ausreichende Barriere gegen Fette und Öle bilden. Nur durch die Kombination aller dieser Eigenschaften kann ein ausreichender Widerstand gegen das Durchdringen von Fetten, Ölen und Wasser erreicht werden. Die Beschichtung alleine, d.h. auf einem beliebigen Basispapier reicht zur Erzielung der gewünschten Eigenschaften nicht aus.

Das Flächengewicht des erfindungsgemäßen Verpackungspapiers soll mindestens 20 g/m², und bevorzugt mindestens 22 g/m² betragen. Derartige Flächengewichte des Verpackungspapiers haben sich als ausreichend hoch erwiesen, um einen ausreichenden Widerstand gegen das Durchdringen von Fetten, Ölen und Wasser sicherzustellen. Vorzugsweise beträgt das Flächengewicht jedoch mindestens 25 g/m², besonders vorzugsweise mindestens 27 g/m².

Um den Materialeinsatz für das erfindungsgemäße Verpackungspapier zu begrenzen, soll das Flächengewicht höchstens 40 g/m², bevorzugt höchstens 37 g/m² und besonders bevorzugt höchstens 35 g/m² betragen. Das Flächengewicht des Verpackungspapiers kann gemäß ISO 536 bestimmt werden.

Das Wasseraufnahmevermögen des Verpackungspapiers spielt eine große Rolle und darf gewisse Werte weder überschreiten noch unterschreiten, um einerseits einen ausreichenden Widerstand gegen flüssiges Wasser zu bilden aber andererseits auch einen definierten Widerstand gegen Wasserdampf.

Das Wasseraufnahmevermögen wird durch den Cobb 60 Wert bestimmt und muss für das erfindungsgemäße Verpackungspapier für die beschichtete Seite mindestens 14 g/m², bevorzugt mindestens 16 g/m² betragen und höchstens 22 g/m² bevorzugt höchstens 20 g/m². Für die unbeschichtete Seite des Verpackungspapiers, falls vorhanden, gilt ebenfalls, dass der Cobb 60 Wert mindestens 14 g/m², bevorzugt mindestens 16 g/m² und höchstens 22 g/m² bevorzugt höchstens 20 g/m² betragen muss.

Der Cobb 60 Wert der beiden Seiten des Verpackungspapiers kann nach ISO 535 bestimmt werden.

Das Polymer zur Verkapselung des pflanzlichen Öls sollte neben der Bildung der Kapselhülle als solche, der Hülle zudem eine geeignete physikalische Struktur verleihen, sodass sich die wasserabweisende Wirkung des Öls auch durch die Kapselhülle hindurch entfalten kann. Bevorzugt sind Polymere die Maleinimidgruppen enthalten, besonders bevorzugt Copolymere mit Maleinimidgruppen und ganz besonders bevorzugt Copolymere von Styrol und Maleinsäureanhydridderivaten.

Das Verpackungspapier kann durch geeignete Wahl der Dicke weiter optimiert werden. Die Bedeutung der Dicke im Rahmen der Erfindung ergibt sich aus der Tatsache, dass eine hohe Dicke, bei gleicher Porosität des Verpackungspapiers, den Widerstand gegen das Durchdringen von Fetten, Ölen und Wasser erhöht. Vorzugsweise beträgt die Dicke des Verpackungspapiers daher mindestens 23 µm, bevorzugt mindestens 25 µm und besonders bevorzugt mindestens 28 µm.

Andererseits lässt sich bei begrenztem Materialeinsatz die Dicke des Verpackungspapiers nicht beliebig erhöhen, ohne dass der Widerstand gegen das Durchdringen von Fetten, Ölen und Wasser wegen der steigenden Porosität unzureichend wird. Außerdem nimmt bei einer porösen Papierstruktur die Bedruckbarkeit ab. Daher soll die Dicke des erfindungsgemäßen Verpackungspapiers höchstens 50 µm, bevorzugt höchstens 45 µm, besonders bevorzugt höchstens 40 µm und ganz besonders bevorzugt höchstens 35 µm betragen.

Die Dicke des Verpackungspapiers kann gemäß ISO 534 an einer einzelnen Lage bestimmt werden.

Um den Widerstand gegen das Durchdringen von Fetten, Ölen und Wasser abzuschätzen, kann die Luftdurchlässigkeit des Verpackungspapiers herangezogen werden. Die Luftdurchlässigkeit gibt Hinweise auf Poren im Papier und soll daher an sich möglichst niedrig sein. Für das erfindungsgemäße Verpackungspapier wird vorzugsweise eine Luftdurchlässigkeit nach Bendtsen von höchstens 20 ml/min, bevorzugt höchstens 17 ml/min und besonders bevorzugt höchstens 15 ml/min gewählt.

Obwohl eine vollkommene Luftundurchlässigkeit nach Bendtsen, also ein Wert von 0 ml/min für einen hohen Widerstand gegen das Durchdringen von Fetten, Ölen und Wasser vorteilhaft ist, kann es für die fallweise erwünschte Durchlässigkeit für Wasserdampf besser sein, wenn das Verpackungspapier nicht absolut dicht ist. In bevorzugten Ausführungsformen beträgt die Luftdurchlässigkeit des Verpackungspapiers nach Bendtsen daher mindestens 3 ml/min, bevorzugt mindestens 5 ml/min und besonders bevorzugt mindestens 7 ml/min.

Die Luftdurchlässigkeit nach Bendtsen kann gemäß ISO 5636-3 bestimmt werden.

Neben der Luftdurchlässigkeit kann auch die Durchlässigkeit des Papiers für Wasserdampf von Bedeutung sein. Sie soll einerseits nicht zu hoch sein, um das rasche Austrocknen der verpackten Lebensmittel zu verhindern und andererseits nicht zu niedrig, sodass, vor allem bei warmen Lebensmitteln, Feuchtigkeit in der Verpackung kondensiert und das Lebensmittel durchfeuchtet. Die Wasserdampfdurchlässigkeit beträgt daher bevorzugt mindestens 200 g/(m² × 24 h), und besonders bevorzugt mindestens 300 g/(m² × 24 h) und ganz besonders bevorzugt 400 g/(m² × 24 h) und/oder bevorzugt höchstens 800 g/(m² × 24 h) und besonders bevorzugt höchstens 700 g/(m² × 24 h).

Die Wasserdampfdurchlässigkeit kann nach ISO 2528:1995 gemessen werden, wobei für die Richtung der Wasserdampfdurchlässigkeit bevorzugt der Wert für den Transport von Wasserdampf von der dem Lebensmittel zugewandten Seite des Verpackungspapiers zur Außenseite herangezogen wird.

Die optischen Eigenschaften des erfindungsgemäßen Verpackungspapiers, insbesondere die Opazität und Weiße sind für den Einsatz als Verpackungspapier für Lebensmitteln von Bedeutung, da der Endverbraucher Lebensmittel auch nach optischen Gesichtspunkten kauft und beispielsweise eine bräunliche Farbe des Verpackungspapiers, Fettflecken am Verpackungspapier oder erhöhte Transparenz des Verpackungspapiers möglicherweise als Hinweise auf alte oder verdorbene Lebensmittel interpretiert werden können.

Daher soll die Opazität des Verpackungspapiers grundsätzlich möglichst hoch sein, was durch das geringe Flächengewicht und den geringen Füllstoffgehalt aber nur schwer erreicht werden kann und beispielsweise den Einsatz spezieller Füllstoffe wie Titandioxid erfordert. Die Opazität des erfindungsgemäßen Verpackungspapiers soll mindestens 50% und bevorzugt mindestens 60% betragen.

Andererseits kann die Opazität des Papiers beispielsweise auch durch einen Aufdruck am Papier vergleichsweise einfach gesteigert werden, weshalb es effizienter sein kann, keinen zu großen Aufwand zur Erhöhung der Opazität zu betreiben. In bevorzugten Ausführungsformen des Verpackungspapiers beträgt die Opazität daher höchstens 90%, bevorzugt höchstens 80% und besonders bevorzugt höchstens 70% betragen.

Die Opazität kann nach ISO 2471:2008 bestimmt werden.

Neben der Opazität ist in vielen Anwendungen auch die Weiße für das Verpackungspapier von Bedeutung, damit beim Bedrucken des Verpackungspapiers die Farben in hoher Qualität wiedergegeben werden. Die Weiße des Verpackungspapiers soll daher grundsätzlich möglichst hoch sein, wie auch bei der Opazität ist das aber für ein Papier mit dem erfindungsgemäß geringen Flächengewicht und geringem Füllstoffgehalt nur schwierig erreichbar. In bevorzugten Ausführungsformen beträgt die Weiße des Verpackungspapiers mindestens 70% und bevorzugt mindestens 80%.

Die Obergrenze für die Weiße ergibt sich wieder aus wirtschaftlichen Überlegungen, da beispielsweise durch einen vollflächigen Aufdruck in weißer Farbe eine mangelnde Weiße des Verpackungspapiers korrigiert werden kann. Die Weiße des Verpackungspapiers beträgt daher vorzugsweise höchstens 95%, besonders bevorzugt höchstens 90% und insbesondere höchstens 85%.

Die Weiße kann nach ISO 2470-1:2009 bestimmt werden. Die Angaben beziehen sich auf jene Seite des Verpackungspapiers, die bedruckt werden soll oder, falls das Verpackungspapier nicht oder beidseitig bedruckt werden soll, auf jene Seite, die sich außen befindet, wenn das Lebensmittel in das Verpackungspapier verpackt ist.

Vorzugsweise hat das Verpackungspapier eine Zugfestigkeit von mindestens 1 kN/m, vorzugsweise von mindestens 1.3 kN/m und insbesondere von mindestens 1.5 kN/m. Eine derartige mechanische Festigkeit ist sowohl im Hinblick auf die weitere Verwendung als auch für das Bedrucken in herkömmlichen Druckmaschinen vorteilhaft.

Durch stärkere Mahlung des Zellstoffs, aus dem das erfindungsgemäße Verpackungspapier hergestellt wird, lässt sich die Zugfestigkeit steigern. Allerdings bedeutet das auch einen erheblichen Energieaufwand, weshalb die Zugfestigkeit in bevorzugten Ausführungsformen höchstens 5 kN/m, bevorzugt höchstens 4 kN/m und besonders bevorzugt höchstens 3 kN/m betragen soll. Unter Zugfestigkeit wird hier die Zugfestigkeit in Maschinenrichtung des Verpackungspapiers verstanden und sie kann nach ISO 1924-2 bestimmt werden.

Das erfindungsgemäße Verpackungspapier umfasst ein Basispapier und eine Beschichtung, die zumindest auf eine Seite des Verpackungspapiers aufgebracht ist.

Das Basispapier umfasst Zellstoff, vorzugsweise Holzzellstoff, der mindestens 60 Gew.-% bezogen auf das Gewicht des Basispapiers ausmacht. Bevorzugt wird man den Anteil an Zellstoff hoch wählen, also mindestens 80 Gew.-%, besonders bevorzugt mindestens 90 Gew.-% und bevorzugt höchstens 100 Gew.-%, besonders bevorzugt höchstens 95 Gew.-% jeweils bezogen auf das Gewicht des Basispapiers.

Der Holzzellstoff kann ein Langfaserzellstoff, vorzugsweise gewonnen aus Fichtenholz , Kiefernholz oder Lärchenholz, oder ein Kurzfaserzellstoff, vorzugsweise gewonnen aus Buchenholz, Birkenholz oder Eukalyptusholz, sein.

Während der Langfaserzellstoff dem Basispapier vor allem Festigkeit verleiht, dient der Kurzfaserzellstoff zur Erhöhung des Basispapiervolumens. Die aus dem Stand der Technik bekannte Mahlung des Zellstoffs vor der Papierproduktion auf der Papiermaschine benötigt für Langfaserzellstoff mehr Energie als für Kurzfaserzellstoff.

Aus diesen Gründen kann als Holzzellstoff bevorzugt ein Gemisch aus Langfaserzellstoff und Kurzfaserzellstoff für das Basispapier des erfindungsgemäßen Verpackungspapiers verwendet werden. Besonders bevorzugt ist ein Gemisch aus Langfaserzellstoff und Kurzfaserzellstoff in einem Massenverhältnis von 2:1 bis zu 1:2.

Alternative Zellstoffe, beispielsweise Zellstoffe aus Flachs, Hanf, Sisal oder Abäca, können den Holzzellstoff ganz oder teilweise ersetzen, wenn das erfindungsgemäße Verpackungspapier besondere Eigenschaften, insbesondere eine besonders hohe Festigkeit, aufweisen soll.

In manchen Ausführungsformen wird der Zellstoff gebleicht, um dem Papier eine ausreichende Weiße zu verleihen. Aus ökologischen Gründen ist es aber vorteilhaft, den Zellstoff ganz oder teilweise durch ungebleichten Zellstoff zu ersetzen. Dadurch wird die ohnehin schon außergewöhnliche Umweltverträglichkeit des erfindungsgemäßen Verpackungspapieres weiter gesteigert. In diesem Fall erhält das Basispapier eine hellbraune bis dunkelbraune Farbe.

Bevorzugt ist im Allgemeinen ein reiner Zellstoff ("virgin pulp"), um ausreichende Festigkeit zu erhalten und die Gefahr von Kontamination des Verpackungspapiers durch Fremdsubstanzen zu vermeiden. Solche Substanzen können beispielsweise in wiederaufbereiteten Fasern vorhanden sein, die daher nicht bevorzugt sind. Ebenso muss wegen des Kontakts mit Lebensmitteln generell klar von der Verwendung von Altpapier abgeraten werden. Vorzugsweise beträgt der Mahlgrad des Zellstoffs nach Schopper-Riegler mindestens 50°, bevorzugt mindestens 55° und besonders bevorzugt mindestens 60°. Ein derartig hoher Mahlgrad ist für die Dichte der Papierstruktur und damit auch für den Widerstand gegen das Durchdringen von Fetten, Ölen und Wasser aber auch für andere Eigenschaften des Papiers, wie die Zugfestigkeit förderlich. Da die Mahlung jedoch mit großem Energieaufwand verbunden ist, beträgt der Mahlgrad vorzugsweise höchstens 80°, besonders vorzugsweise höchstens 75° und insbesondere höchstens 70°.

Die Messung des Mahlgrads nach Schopper-Riegler kann gemäß ISO 5267 erfolgen.

Das Basispapier kann Füllstoffe enthalten. Die Füllstoffe dienen zur Erhöhung der Weiße und der Opazität, zur Verbesserung der Bedruckbarkeit des Papiers und zur Reduktion der Kosten für das Basispapier. Während man aus diesen Gründen in der Papierherstellung generell bestrebt ist, einen möglichst hohen Füllstoffgehalt im Papier zu erreichen, soll für das Basispapier des erfindungsgemäßen Verpackungspapiers der Füllstoffgehalt eher niedrig sein. Erfindungsgemäß wird nämlich der hohe Widerstand gegen das Durchdringen von Fetten, Ölen und Wasser für die erfindungsgemäße Beschichtung erst dadurch erreicht, dass auch das Basispapier ausreichend dicht, also wenig porös ist. Da ein höherer Füllstoffgehalt regelmäßig zu einer erhöhten Porosität führt, soll der Füllstoffgehalt des Basispapiers in jedem Fall weniger als 20 Gew.-%, bevorzugt weniger als 15 Gew-% und besonders bevorzugt weniger als 10 Gew.-% jeweils bezogen auf das Gewicht des Basispapiers betragen.

Das Basispapier kann grundsätzlich auch ohne Füllstoff hergestellt werden. Im Hinblick auf eine ausreichende Opazität des Verpackungspapiers wird der Füllstoffgehalt jedoch bevorzugt mit mindestens 2 Gew.-% und besonders bevorzugt mit mindestens 5 Gew.-% bezogen auf das Gewicht des Basispapiers gewählt.

Grundsätzlich können alle aus dem Stand der Technik für die Papierproduktion bekannten Füllstoffe eingesetzt werden. Die Füllstoffe können Silikate, Karbonate und Oxide umfassen, insbesondere Karbonate und Oxide von Metallen. Für die Zwecke der Erfindung eignen sich beispielsweise Kalziumkarbonat, insbesondere gefälltes Kalziumkarbonat, Aluminiumhydroxid, Talkum, Kaolin und Titandioxid.

Für das Basispapier des erfindungsgemäßen Verpackungspapiers ist Titandioxid bevorzugt, weil es besonders zur hohen Weiße und Opazität des Basispapiers beiträgt und schon in geringer Menge wirksam ist. Dies ist wichtig, weil an Verpackungspapiere für Lebensmittel auch hohe optische Anforderungen gestellt werden, aber aus den oben genannten Gründen der Füllstoffgehalt vergleichsweise niedrig sein muss.

Für das Basispapier des erfindungsgemäßen Verpackungspapiers ist auch Talkum ein bevorzugter Füllstoff, weil es fettabweisende Eigenschaften besitzt und somit die Wirkung der aufgetragenen Beschichtung verstärkt.

Ein weiterer bevorzugter Füllstoff für das Basispapier ist Kaolin, weil es durch seine Plättchenform die Länge der Poren im Papier erhöht und damit den Weg von Fetten, Ölen und Wasser durch das Papier verlängert und den Widerstand gegen ein Durchdringen des Papiers erhöht.

Zur Erzielung des Leimungsgrads des fertigen Verpackungspapiers kann das Basispapier Leimungsmittel enthalten. Dafür kommen insbesondere Leime, Harze oder Polymere wie ein Copolymer aus Styrol und Acrylsäureestern oder Alkyl-Keten-Dimere (AKD) oder alkyliertes Bernsteinsäureanhydrid (ASA) in Frage. Ganz besonders bevorzugt sind Alkyl-Keten-Dimere.

Die Leimung kann in der Masse oder auf der Oberfläche erfolgen, bevorzugt in der Masse.

Weitere aus dem Stand der Technik bekannte Substanzen und Prozesshilfsmittel, beispielsweise Stärke, Retentionshilfsmittel, Entschäumer, Dispergiermittel und andere Substanzen, die für die Herstellung des Basispapiers hilfreich oder erforderlich sein können, kann der Fachmann leicht anhand seines Fachwissens auswählen. Generell ist dabei zu bedenken, dass das Basispapier mit Lebensmitteln in Kontakt kommt und daher gewöhnlich gesetzliche Bestimmungen zu erfüllen sind.

Auch der Einsatz von Pigmenten, wie roten, gelben oder schwarzen Eisenoxiden, oder Kohlenstoff, ist möglich, um dem Basispapier eine bestimmte Farbe zu verleihen. Ebenso können organische Farbstoffe eingesetzt werden, sofern sie für den Kontakt mit Lebensmitteln zugelassen sind. Bevorzugt werden allerdings weiße Basispapiere.

Des Weiteren ist der Einsatz von Aromastoffen im Basispapier denkbar. Sie sind allerdings im Zusammenhang mit der Verwendung als Verpackungspapier für Lebensmittel oft nicht erwünscht, da sie Geruch und Geschmack des verpackten Lebensmittels beeinflussen können, und sie sind jedenfalls für das erfindungsgemäße Verpackungspapier nicht bevorzugt.

Der Beschichtung des Basispapiers kommt wesentliche Bedeutung zu, da sie gemeinsam mit der dichten Struktur des Basispapiers dazu dient, einen ausreichenden Widerstand gegen das Durchdringen von Fetten, Ölen und Wasser durch das Verpackungspapier zu erzielen.

Die auf das Basispapier aufgetragene Beschichtung macht in bevorzugten Ausführungsformen mindestens 0,5 g/m², bevorzugt mindestens 1 g/m² und besonders bevorzugt mindestens 2 g/m² des Flächengewichts des erfindungsgemäßen Verpackungspapiers aus, um einen ausreichenden Widerstand gegen das Durchdringen von Fetten, Ölen und Wasser zu erreichen.

In bevorzugten Ausführungsformen macht die auf das Basispapier aufgetragene Beschichtung höchstens 12 g/m², bevorzugt höchstens 8 g/m², besonders bevorzugt höchstens 6 g/m² und ganz besonders bevorzugt höchstens 5 g/m² des Flächengewichts des erfindungsgemäßen Verpackungspapiers aus. Ein zu hoher Materialauftrag verbessert den Widerstand gegen das Durchdringen von Fetten, Ölen und Wasser nur mehr unwesentlich, erhöht aber die Kosten des Verpackungspapiers. Außerdem ist der Auftrag großer Mengen einer Beschichtungslösung auf verhältnismäßig dünne Papiere generell schwierig, insbesondere bei wässrigen Beschichtungslösungen.

Die Beschichtung kann auf das Basispapier einseitig oder beidseitig erfolgen. Während ein beidseitiger Auftrag einen höheren Widerstand gegen das Durchdringen von Fetten, Ölen und Wasser ergibt, ist er oft nicht erforderlich, sodass aus wirtschaftlichen Gründen darauf verzichtet werden kann. Außerdem kann die erfindungsgemäße Beschichtung die Bedruckbarkeit auf der beschichteten Seite erheblich beeinträchtigen. Daher ist das erfindungsgemäße Verpackungspapier bevorzugt nur einseitig beschichtet.

Im Allgemeinen kann bei einer einseitigen Beschichtung jede der beiden Seiten des Basispapiers mit der erfindungsgemäßen Beschichtung beschichtet sein, aber vorzugsweise ist jene Seite des Papiers beschichtet, die später dem im Verpackungspapier verpackten Lebensmittel zugewandt sein wird.

Da die Oberseite des Basispapiers im Allgemeinen glatter ist und eine höhere Glätte zu einer geschlossenen Beschichtung und damit zu einem höheren Widerstand gegen das Durchdringen von Fetten, Ölen und Wasser führt, ist in einer bevorzugten Ausführung die Oberseite des Basispapiers beschichtet.

Andererseits sind Verpackungspapiere oft auf einer Seite bedruckt. Da sich wegen der höheren Druckqualität die Oberseite des Verpackungspapiers besser bedrucken lässt, kann alternativ auch die Siebseite des Verpackungspapiers mit der erfindungsgemäßen Beschichtung beschichtet sein, wenn sich dadurch ein ausreichender Widerstand gegen das Durchdringen von Fetten, Ölen und Wasser erreichen lässt.

Die Begriffe "Oberseite" und "Siebseite" sind aus Sicht der Papierherstellung zu verstehen. Die Siebseite ist jene Seite des Papiers, die bei der Papierherstellung auf einer Papiermaschine im Kontakt mit dem Sieb ist und daher oft eine geringere Glätte und geringeren Füllstoffgehalt aufweist. Die Oberseite ist die der Siebseite gegenüberliegende Seite und oft glatter und daher für den Druck besser geeignet.

Die Beschichtung kann in einem Schritt oder in mehreren Schritten aufgetragen werden. Der Auftrag in mehreren Schritten ist bevorzugt, wenn die aufgetragene Menge an Beschichtungsmaterial abhängig vom Flächengewicht des Basispapiers etwa 8 g/m² überschreitet. Nach jedem Auftragsschritt kann das Verpackungspapier getrocknet werden.

In einer bevorzugten Ausführungsform ist das Basispapier nur auf einer Seite mit der erfindungsgemäßen Beschichtung beschichtet und die andere Seite mit Stärke beschichtet. Diese Stärkebeschichtung verbessert die Bedruckbarkeit und verhindert ein Einrollen des Papiers nach dem Trocknen, was für die Weiterverarbeitung des Verpackungspapiers erwünscht ist. Zur Beschichtung mit Stärke können die aus dem Stand der Technik an sich bekannten Stärkelösungen und Verfahren verwendet werden. Im Rahmen der Erfindung ist insbesondere der Auftrag in einer Filmpresse vorteilhaft.

Die Menge an Stärke, die auf diese nicht erfindungsgemäß beschichtete Seite des Verpackungspapiers aufgetragen sein kann, beträgt bevorzugt mindestens, 0,5 g/m², besonders bevorzugt mindestens 1 g/m² und bevorzugt höchstens 4 g/m², besonders bevorzugt höchstens 3 g/m² betragen.

Die Beschichtungslösung, die erfindungsgemäß auf das Basispapier aufgetragen ist, umfasst ein Lösungsmittel und das Beschichtungsmaterial.

Der Begriff "Lösungsmittel" oder "Beschichtungslösung" soll hier nicht bedeuten, dass es sich bei der Beschichtungslösung um eine Lösung im chemischen Sinn handelt. Die Beschichtungslösung kann ebenso eine Lösung, Dispersion, Suspension, Emulsion oder jede andere Form eines Gemisches sein.

Als Lösungsmittel ist Wasser gegenüber allen anderen Lösungsmitteln oder Gemischen aus Lösungsmitteln und insbesondere organischen Lösungsmitteln bevorzugt, da es toxikologisch unbedenklich ist und auf der Papiermaschine ohne weitere Maßnahmen, insbesondere ohne Explosionsschutz, eingesetzt werden kann. Es ist unvermeidlich, dass kleine Reste des Lösungsmittels im Papier verbleiben und den Geruch und Geschmack des verpackten Lebensmittels beeinflussen können. Auch deshalb sind organische Lösungsmittel nicht bevorzugt. Da aber abgesehen von Wasser andere Lösungsmittel oder Lösungsmittelgemische mit entsprechenden Maßnahmen prinzipiell eingesetzt werden können, sollen sie auch von der Erfindung umfasst sein. Insbesondere wäre der Einsatz eines Gemischs aus Wasser und Ethanol als Lösungsmittel denkbar.

Das Beschichtungsmaterial soll mindestens 30 Gew.-%, bevorzugt mindestens 40 Gew.-%, besonders bevorzugt mindestens 50 Gew.-% und ganz besonders bevorzugt mindestens 60 Gew.-% bezogen auf das Gewicht der Beschichtungslösung betragen. Damit ist sichergestellt, dass für den Auftrag einer vorgegebenen Menge an Beschichtungsmaterial nicht zu große Mengen der Beschichtungslösung auf das Basispapier aufgetragen werden müssen, was bei dünnen Papieren im Allgemeinen schwierig ist, insbesondere bei wässrigen Beschichtungslösungen.

Das Beschichtungsmaterial soll höchstens 80 Gew.-%, bevorzugt höchstens 75 Gew.-% und besonders bevorzugt höchstens 70 Gew.-% bezogen auf das Gewicht der Beschichtungslösung ausmachen. Dadurch wird ein zu niedriger Gehalt des Lösungsmittels in der Beschichtungslösung mit einer entsprechend hohen Viskosität der Beschichtungslösung vermieden, und die Beschichtungslösung kann somit effizient auf das Basispapier aufgetragen werden.

Das im Rahmen der Erfindung verwendete Beschichtungsmaterial enthält ein pflanzliches Öl, wobei bevorzugt verschiedene pflanzliche Öle, wie Sonnenblumenöl, Sojabohnenöl, Palmöl oder Rapsöl in Frage kommen.

Bevorzugt sind Sonnenblumenöl und Sojabohnenöl oder ein Gemisch daraus und ganz besonders bevorzugt ist ein Gemisch aus Sonnenblumenöl und Sojabohnenöl im Massenverhältnis 1:1.

Die Summe der pflanzlichen Öle im Beschichtungsmaterial soll bevorzugt mindestens 20%, besonders bevorzugt mindestens 25% und ganz besonders bevorzugt mindestens 30% der Masse des Beschichtungsmaterials betragen. Die Summe der pflanzlich Öle im Beschichtungsmaterial soll bevorzugt höchstens 60%, besonders bevorzugt höchstens 55% und ganz besonders bevorzugt höchstens 50% der Masse des Beschichtungsmaterials betragen.

Wie eingangs erwähnt, ist das pflanzliche Öl in einem Polymer, beispielsweise in einem Copolymer von Styrol und Maleinsäureanhydridderivaten verkapselt. Diese Kapseln können beispielsweise nach dem in WO 2008/014903 beschriebenen Prozess hergestellt werden.

Das Bindemittel im Beschichtungsmaterial kann eine Stärke, ein Stärkederivate, ein Cellulosederivat oder ein Polymer, insbesondere Polyvinylalkohol oder Polystyrolacrylat sein. Bevorzugt ist als Bindemittel Stärke, Polyvinylalkohol oder ein Gemisch daraus und ganz besonders bevorzugt ist als Bindemittel ein Gemisch aus Stärke, Polyvinylalkohol und Polystyrolacrylat im Massenverhältnis von etwa 4:3:8.

Die Summe der Bindemittel im Beschichtungsmaterial soll bevorzugt mindestens 15%, besonders bevorzugt mindestens 20% und ganz besonders bevorzugt mindestens 25% der Masse des Beschichtungsmaterials betragen. Die Summe der Bindemittel im Beschichtungsmaterial soll bevorzugt höchstens 75%, besonders bevorzugt höchstens 60% und insbesondere höchstens 50% der Masse des Beschichtungsmaterials betragen.

Das Beschichtungsmaterial enthält zumindest Talkum wegen seiner fettabweisenden Eigenschaften als Füllstoff und kann aber noch weitere Füllstoffe enthalten. Diese weiteren Füllstoffe können vor allem dazu dienen, die Opazität und Weiße des Verpackungspapiers noch zu erhöhen. Als weitere Füllstoffe kommen prinzipiell alle Füllstoffe in Frage, die auch für die Herstellung des Basispapiers verwendet werden können, insbesondere Silikate, Karbonate und Oxide, vor allem Kalziumkarbonat, insbesondere gefälltes Kalziumkarbonat, Aluminiumhydroxid, Kaolin und Titandioxid. Bevorzugt sind Titandioxid, weil es zu einer hohen Weiße und Opazität führt, und Kaolin, weil es wegen seiner Plättchenform die Diffusionswege durch die Beschichtung verlängert. Besonders bevorzugt ist ein Gemisch aus Talkum, Titandioxid und Kaolin, ganz besonders bevorzugt in einem Massenverhältnis von Talkum: Titandioxid : Kaolin von etwa 16:2:7

Der Anteil an Talkum im Beschichtungsmaterial beträgt bevorzugt mindestens 5%, besonders bevorzugt mindestens 10% und/oder bevorzugt höchstens 30% und besonders bevorzugt höchstens 25% bezogen auf die Masse des Beschichtungsmaterials.

Die Summe der Füllstoffe, einschließlich des Talkums, im Beschichtungsmaterial beträgt vorzugsweise mindestens 5 Gew.-%, besonders bevorzugt mindestens 10 Gew.-% und ganz besonders bevorzugt mindestens 20 Gew.% der Masse des Beschichtungsmaterials. Die Summe der Füllstoffe im Beschichtungsmaterial soll höchstens 60 Gew.-%, bevorzugt höchstens 50 Gew.-% und besonders bevorzugt höchstens 45 Gew.-% bezogen auf die Masse des Beschichtungsmaterials betragen.

Das Beschichtungsmaterial kann Wachse enthalten. Wachse verbessern den Widerstand gegen das Durchdringen von Fetten, Ölen und Wasser, verschlechtern aber die biologische Abbaubarkeit, weshalb deren Gehalt im Beschichtungsmaterial weniger als 5 Gew.-% und bevorzugt weniger als 2 Gew.-% bezogen auf das Gewicht des Beschichtungsmaterials betragen soll. Die Wachse können beispielsweise Paraffine sein.

Das Beschichtungsmaterial kann weitere Substanzen umfassen, die beispielsweise zur Verarbeitbarkeit des Beschichtungsmaterials beitragen, oder die Viskosität oder Haltbarkeit beeinflussen, sofern sie den Widerstand gegen das Durchdringen von Fetten, Ölen und Wasser und die biologische Abbaubarkeit nicht nennenswert verschlechtern. Diese Substanzen können Salze von Polymeren sein.

Die Summe der weiteren Substanzen im Beschichtungsmaterial beträgt vorzugsweise weniger als 15%, besonders bevorzugt weniger als 10% und ganz besonders bevorzugt weniger als 7% der Masse des Beschichtungsmaterials.

Vorzugsweise besteht das Beschichtungsmaterial zu mindestens 50 Gew.-%, bevorzugt mindestens 60 Gew.-% und besonders bevorzugt mindestens 70 Gew.-% aus Materialien biologischen Ursprungs. Die Gruppe der Materialien biologischen Ursprungs umfasst beispielsweise pflanzliche Öle, Stärke und Füllstoffe, während erdölbasierte Wachse und erdölbasierte Polymere davon nicht umfasst sind.

Die Herstellung des Basispapiers kann nach aus dem Stand der Technik bekannten Methoden erfolgen. Insbesondere kann für die Herstellung des Basispapiers eine Papiermaschine verwendet werden, die gemäß dem Stand der Technik einen Stoffauflauf, eine Siebpartie, eine Pressenpartie, eine Trockenpartie und eine Aufrollung umfasst.

Eine wässrige Suspension aus Zellstoff und optional Füllstoff und anderen Substanzen und Prozesshilfsmitteln wird beim Stoffauflauf auf das Sieb der Papiermaschine aufgebracht und in der Siebpartie zunächst durch Schwerkraft und Unterdruck entwässert. Danach folgt die Pressenpartie, in der die Papierbahn weiter durch mechanischen Druck entwässert wird. Das verbleibende Wasser wird schließlich in der Trockenpartie verdampft, so dass das Verpackungspapier seine Gleichgewichtsfeuchte unter üblichen Bedingungen (23°C, 50% rH) von etwa 4-7 Gew.-% erreicht. Am Ende der Papiermaschine folgt die Aufrollung.

In eine Papiermaschine ist häufig eine Film- oder Leimpresse in die Trockenpartie integriert, in der das Papier getränkt oder eine Beschichtung aufgetragen werden kann. Insbesondere eine Filmpresse bietet die Möglichkeit auf die beiden Seiten des Papiers in einem Schritt zwei verschiedene Beschichtungslösungen aufzutragen. Der Auftrag der erfindungsgemäßen Beschichtungslösung kann bevorzugt in einer solchen Filmpresse erfolgen und ist für den Fachmann leicht möglich.

Abgesehen von der Film- oder Leimpresse, die einen Auftrag direkt in der Papiermaschine erlaubt, ist auch ein Auftrag der Beschichtungslösung auf einer separaten Auftragsvorrichtung denkbar. Die Auftragsvorrichtung kann beispielsweise als Druckmaschine, insbesondere als Tiefdruckmaschine oder Flexodruckmaschine, oder als Sprühvorrichtung ausgeführt sein. Eine solche Auftragsvorrichtung kann auch anstatt oder ergänzend zur Film- oder Leimpresse in die Papiermaschine integriert sein.

Selbstverständlich ist nach dem Auftrag der erfindungsgemäßen Beschichtung eine Trocknung des Papiers erforderlich, um das erfindungsgemäße Verpackungspapier zu erhalten.

Es zeigt sich, dass das Verpackungspapier nach einer der vorhergehenden Ausführungsformen in der Lage ist, auf überraschende und bisher nicht gekannte Weise einen hohen Widerstand gegen das Durchdringen von Fetten, Ölen und Wasser mit einer ausgezeichneten biologischen Abbaubarkeit zu kombinieren. Versuche des Erfinders haben gezeigt, dass Verpackungspapiere nach einer Ausführungsform der Erfindung insbesondere vergleichsweise kurze Zeiträume von einigen Minuten bis zu einer halben Stunde hinsichtlich des Widerstandes gegen das Durchdringen von Fetten, Ölen und Wasser vergleichbar mit einem Verpackungspapier sind, das mit Polyethylen beschichtet ist, gleichzeitig aber dessen Nachteile vermeidet. Insofern ist das erfindungsgemäße Verpackungspapier insbesondere für Fastfood-Artikel außerordentlich gut geeignet, die regelmäßig kurz nach ihrer Verpackung bereits verzehrt werden.

Ganz besonders vorteilhaft ist das erfindungsgemäße Verpackungspapier für heißes Fastfood, beispielsweise Hamburger, weil es den Durchtritt von Fetten, Ölen und Wasser nicht nur ausreichend lange verzögert, sondern gleichzeitig ausreichend durchlässig für Wasserdampf ist, sodass der Fastfood-Artikel nicht durchfeuchtet, bzw. "matschig" wird. In dieser Hinsicht ist das erfindungsgemäße Verpackungspapier sogar einem herkömmlichen Verpackungspapier, welches mit Polyethylen beschichtet ist, überlegen. In der vorliegenden Offenbarung werden unter dem Begriff "Hamburger" auch alle verwandten Arten von Sandwiches verstanden, insbesondere Cheeseburger, heiße Hühnchen-Sandwiches, heiße Fisch-Sandwiches, Fleischkäseund Frikadellenbrötchen.

### BESCHREIBUNG DER BEVORZUGTEN AUSFÜHRUNGSFORM

Die Vorteile der Erfindung sollen an einem beispielhaften, erfindungsgemäßen Verpackungspapier für Lebensmittel gezeigt werden.

Das Basispapier für das erfindungsgemäße Verpackungspapier wurde aus den folgenden Bestandteilen gefertigt.

Als Zellstoff wurde Langfaserzellstoff zu 48 Gew.-%, bestehend aus einem Gemisch von Zellstoffen aus Fichtenholz, Kiefernholz und Lärchenholz, und Kurzfaserzellstoff zu 44 Gew.-%, bestehend aus einem Gemisch von Zellstoffen aus Birkenholz und Eukalyptusholz, verwendet, sodass der Anteil des Zellstoffs am Basispapier 92 Gew.-% betrug. Als Füllstoff wurde nur Titandioxid zu einem Anteil von 7,5 Gew.-% verwendet. Der Rest entfiel auf andere Substanzen und Prozesshilfsmittel, insbesondere auf eine geringe Menge eines Alkyl-Keten-Dimers in der Masse zur Erzielung des gewünschten Leimungsgrads.

Alle obigen Angaben in Gew.-% beziehen sich auf das Basispapier ohne Beschichtung.

Vor der Papierproduktion wurde der Zellstoff auf einen Mahlgrad von 60° bis 70° nach Schopper-Riegler gemahlen, gemessen nach ISO 5267.

Das Basispapier wurde auf einer Fourdrinier Papiermaschine nach aus dem Stand der Technik bekannten Verfahren gefertigt. In der Filmpresse der Papiermaschine wurde die Beschichtungslösung auf die Oberseite des Basispapiers und eine Stärkelösung auf die Siebseite aufgetragen und das Papier danach auf einen Feuchtegehalt von 5 Gew.-% bezogen auf das Gewicht des fertigen Verpackungspapiers getrocknet.

Die Beschichtungslösung bestand aus 36 Gew.-% Wasser und 64 Gew.-% Beschichtungsmaterial, jeweils bezogen auf das Gewicht der Beschichtungslösung.

Das Beschichtungsmaterial selbst enthielt etwa 18% Sonnenblumenöl, 18% Sojabohnenöl, verkapselt in einem Copolymer aus Styrol und Maleinsäureanhydridderivaten, sowie 7% Polyvinylalkohol, 5% Stärke und 14% Polystyrolacrylat. Die Füllstoffe waren 20% Talkum, 2,5% Titandioxid und 9% Kaolin. Des Weiteren enthielt das Beschichtungsmaterial 2% Wachse und etwa 4,5% Prozesshilfsmittel, wie Dispergiermittel. Damit enthält das Beschichtungsmaterial mehr als 70% Materialien biologischen Ursprungs.

Alle Angaben beziehen sich auf die Masse des Beschichtungsmaterials.

Die Flächengewichte des fertigen Verpackungspapiers (29.5 g/m²) und des unbeschichteten Basispapiers (25 g/m²) wurden nach ISO 536 bestimmt, und durch Bildung der Differenz der Flächengewichte ergibt sich die aufgetragene Menge der Beschichtungen zu 4.5 g/m², wobei aus Erfahrung bekannt ist, dass die Menge der auf die Siebseite aufgetragene Stärke etwa 1 g/m² beträgt. Es ergibt sich daher, dass die Menge des auf die Oberseite aufgetragenen Beschichtungsmaterials etwa 3,5 g/m² beträgt.

Das Wasseraufnahmevermögen wurde durch den Cobb 60 Wert gemäß ISO 535 für beide Seiten des Verpackungspapiers bestimmt. Für die erfindungsgemäß beschichtete Seite ergab sich ein Wert von 17 g/m², für die mit Stärke beschichtete Seite ein Wert von 18 g/m².

Die Dicke des Verpackungspapiers wurde an einer einzelnen Lage gemäß ISO 534 gemessen und ein Wert von 31 µm wurde erhalten.

Die Luftdurchlässigkeit nach Bendtsen des Verpackungspapiers wurde gemäß ISO 5636-3 gemessen und ein Wert von 9 ml/min erhalten.

Die Wasserdampfdurchlässigkeit wurde gemäß ISO 2528:1995 in Richtung von der erfindungsgemäß beschichteten zur mit Stärke beschichteten Seite gemessen und ein Wert von etwa 500 g/(m² × 24 h) wurde erhalten.

Die Opazität des Verpackungspapiers wurde gemäß ISO 2471:2008 gemessen und ein Wert von 65% wurde erhalten.

Die Weiße des Verpackungspapiers wurde auf der Siebseite gemäß ISO 2470-1:2009 gemessen und ein Wert von 83% wurde erhalten.

Die Zugfestigkeit des Verpackungspapiers wurde gemäß ISO 1924-2 gemessen und ein Wert von 2.0 kN/m wurde erhalten.

Schließlich wurde noch die biologische Abbaubarkeit gemäß EN 13432 *"Verpackung* - *Anforderungen an die Verwertung von Verpackungen durch Kompostierung und biologischen Abbau* - *Prüfschema und Bewertungskriterien für die Einstufung von Verpackungen"* getestet. Dabei wird die Verpackung in einem definierten Kompost gelagert und in regelmäßigen Abständen wird eine Probe genommen. Von dieser Probe wird bestimmt, welcher Anteil in Gew.-% von einem Sieb mit einer Maschenweite von 2 mm zurückgehalten wird. Die Verpackung erfüllt die Anforderungen der Norm, wenn nach 12 Wochen weniger als 10 Gew.-% der Probenmasse im Sieb zurückgehalten werden.

Für das erfindungsgemäße Verpackungspapier zeigte sich, dass bereits nach zwei Wochen weniger als 0,1 Gew.-% der Probenmasse in einem Sieb mit einer Maschenweite von 2 mm zurückgehalten werden, sodass eine ausgezeichnete biologische Abbaubarkeit vorliegt.

Zum Test des Widerstands gegen das Durchdringen von Fetten, Ölen und Wasser wurden in einem Experiment verschiedene Lebensmittel jeweils in das erfindungsgemäße Verpackungspapier und in ein mit Polyethylen beschichtetes Papier eingewickelt. Nach einer bestimmten Zeit wurden die Flecken und Verfärbungen des erfindungsgemäßen Verpackungspapiers subjektiv mit jenen auf dem mit Polyethylen beschichteten Papier verglichen. Es zeigte sich, dass über den Zeitraum von einigen Minuten bis zu einer halben Stunde beide Papiere eine annähernd gleich wirksame Barriere gegen das Durchdringen von Fetten, Ölen und Wasser bildeten. Nach längeren Zeiträumen, typischerweise über einer Stunde war das mit Polyethylen beschichtete Papier hinsichtlich seiner Barrierewirkung überlegen. Das erfindungsgemäße Verpackungspapier eignet sich daher bevorzugt zur Verpackung von Lebensmitteln, die für einen raschen Konsum vorgesehen sind, bevorzugt für Lebensmittel aus dem Bereich FastFood und ganz besonders bevorzugt für Hamburger, Cheeseburger oder Sandwiches.

Das erfindungsgemäße Papier bildet somit zumindest kurzfristig sowohl einen hohen Widerstand gegen das Durchdringen von Fetten, Ölen und Wasser und besitzt eine ausgezeichnete biologische Abbaubarkeit und kann daher diese zwei widersprüchlichen Anforderungen sehr gut verbinden.

## Patentansprüche

1. Verpackungspapier für Lebensmittel
- mit einem Flächengewicht von zwischen 20 g/m² und 40 g/m², und
- mit einem Anteil an Füllstoff, der weniger als 20 Gew.-% bezogen auf das Gewicht des unbeschichteten Papiers aufweist,
- wobei das Verpackungspapier zumindest auf einer Seite eine Beschichtung aufweist, die ein in ein Polymer verkapseltes pflanzliches Öl, Talkum und ein Bindemittel umfasst, und
- wobei beide Seiten des fertigen Verpackungspapiers einen Cobb 60 Wert von 14 g/m² bis 22 g/m² aufweisen.

2. Verpackungspapier für Lebensmittel nach Anspruch 1, bei dem das genannte Flächengewicht mindestens 25 g/m², vorzugsweise mindestens 27 g/m² beträgt, und/oder
bei dem das genannte Flächengewicht höchstens 37 g/m², vorzugsweise höchstens 35 g/m² beträgt, und/oder
bei dem der genannte Cobb 60 Wert mindestens 16 g/m², und/oder höchstens 20 g/m² beträgt.

3. Verpackungspapier für Lebensmittel nach einem der vorhergehenden Ansprüche, bei dem das Polymer eine Maleinimidgruppe enthält, und vorzugsweise durch ein Copolymer mit Maleinimidgruppen, insbesondere ein Copolymer von Styrol und Maleinsäureanhydridderivaten gebildet ist.

4. Verpackungspapier für Lebensmittel nach einem der vorhergehenden Ansprüche, bei dem die Luftdurchlässigkeit nach Bendtsen höchstens 20 ml/min und/oder mindestens 3 ml/min beträgt, und/oder
welches zumindest in einer Richtung eine Wasserdampfdurchlässigkeit nach ISO 2528 von mindestens 200g/(m²×24h) und/oder von höchstens 800g/(m²×24h) hat, wobei die Richtung vorzugsweise einem Transport von Wasserdampf von einer Seite, die bei einem verpackten Lebensmittel dem Lebensmittel zugewandt ist, zur Außenseite der Verpackung entspricht.

5. Verpackungspapier für Lebensmittel nach einem der vorhergehenden Ansprüche, dessen Opazität nach ISO 2471:2008 mindestens 50%, vorzugsweise mindestens 60% und/oder höchstens 90%, vorzugsweise höchstens 80% und besonders vorzugsweise höchstens 70% beträgt, und/oder
bei dem die Weiße nach ISO 2470-1:2009 der im Gebrauch von dem Lebensmittel abgewandten Seite und/oder einer zu bedruckenden Seite mindestens 70%, vorzugsweise mindestens 80% beträgt und/oder höchstens 95%, vorzugsweise höchstens 90% und besonders vorzugsweise höchstens 85% beträgt.

6. Verpackungspapier für Lebensmittel nach einem der vorhergehenden Ansprüche, dessen Basispapier einen Zellstoffanteil von mindestens 60 Gew.-%, vorzugsweise von mindestens 80 Gew.-% und besonders vorzugsweise von mindestens 90 Gew.-% bezogen auf die Masse des Basispapiers aufweist, wobei der Anteil vorzugsweise 95 Gew.-% bezogen auf die Masse des Basispapiers nicht übersteigt.

7. Verpackungspapier für Lebensmittel nach Anspruch 6, bei dem der Mahlgrad des Zellstoffs nach Schopper-Riegler mindestens 50°, vorzugsweise mindestens 55° und besonders vorzugsweise mindestens 60° beträgt und/oder höchstens 80°, vorzugsweise höchstens 75° und besonders vorzugsweise höchstens 70° beträgt.

8. Verpackungspapier für Lebensmittel nach einem der vorhergehenden Ansprüche, bei dem das Basispapier einen Füllstoff enthält, dessen Anteil weniger als 15 Gew.-%, vorzugsweise weniger als 10 Gew.-% jeweils bezogen auf das Gewicht des Basispapiers beträgt und/oder mindestens 2 Gew.-%, vorzugsweise mindestens 5 Gew.-% bezogen auf das Gewicht des Basispapiers beträgt, und
bei dem der Füllstoff Talkum, Kaolin, Titandioxid oder ein Gemisch daraus umfasst, und/oder
bei dem die Beschichtung einen Anteil am Flächengewicht des Verpackungspapiers ausmacht, der mindestens 0,5 g/m², vorzugsweise mindestens 1 g/m² und besonders vorzugsweise mindestens 2 g/m² beträgt, und/oder der höchstens 12 g/m², vorzugsweise höchstens 8 g/m², besonders vorzugsweise höchstens 6 g/m² und insbesondere höchstens 5 g/m² beträgt.

9. Verpackungspapier für Lebensmittel nach einem der vorhergehenden Ansprüche, bei dem beide Seiten des Basispapiers mit der genannten Beschichtung beschichtet sind, oder
nur die Oberseite des Basispapiers mit der genannten Beschichtung beschichtet ist, oder
nur die Siebseite des Papiers mit der genannten Beschichtung beschichtet ist, und die Oberseite des Papiers bedruckt ist.

10. Verpackungspapier für Lebensmittel nach einem der vorhergehenden Ansprüche, bei dem das Basispapier nur auf einer Seite mit der genannten Beschichtung beschichtet ist und die andere Seite mit Stärke beschichtet ist,
wobei die Menge an Stärke vorzugsweise mindestens 0,5 g/m² und/oder höchstens 4 g/m² beträgt.

11. Verpackungspapier für Lebensmittel nach einem der vorhergehenden Ansprüche, bei dem das genannte pflanzliche Öl zumindest anteilig Sonnenblumenöl, Sojabohnenöl, Palmöl oder Rapsöl enthält, insbesondere ein Gemisch aus Sonnenblumenöl und Sojabohnenöl, vorzugsweise in einem Massenverhältnis von etwa 1:1.

12. Verpackungspapier für Lebensmittel nach einem der vorhergehenden Ansprüche, bei dem das Bindemittel des Beschichtungsmaterials eine Stärke, ein Stärkederivat, ein Cellulosederivat oder ein Polymer, insbesondere Polyvinylalkohol oder Polystyrolacrylat enthält.

13. Verpackungsmaterial für Lebensmittel nach einem der vorhergehenden Ansprüche, bei dem das Beschichtungsmaterial ferner einen Füllstoff enthält, der ein Silikat, ein Karbonat, ein Oxid, insbesondere Kalziumkarbonat, speziell gefälltes Kalziumkarbonat, Aluminiumhydroxid, Kaolin, Titandioxid oder Kombinationen daraus enthält, wobei der Füllstoff vorzugsweise ein Gemisch aus Talkum, Titandioxid und Kaolin umfasst, wobei der Anteil an Talkum denjenigen von Titandioxid und Kaolin übersteigt, und/oder
bei dem der Anteil an Talkum mindestens 5 Gew.-%, vorzugsweise mindestens 10 Gew.-% und/oder höchstens 30 Gew.-%, vorzugsweise höchstens 25 Gew.-% bezogen auf die Masse des Beschichtungsmaterials umfasst.

14. Verpackungspapier für Lebensmittel nach einem der vorhergehenden Ansprüche, bei dem das Beschichtungsmaterial zu mindestens 50 Gew.-%, vorzugsweise zu mindestens 60 Gew.-% und besonders vorzugsweise zu mindestens 70 Gew.-% aus Materialien biologischen Ursprungs besteht.

15. Verwendung eines Verpackungspapiers nach einem der vorhergehenden Ansprüche zur Verpackung von heißem oder kaltem Fastfood, insbesondere von Sandwiches, Hamburgern, Döner oder Burritos.

## Claims

1. Packaging paper for food
- with a basis weight between 20 g/m² and 40 g/m², and
- with a filler content of less than 20% by weight with respect to the weight of the uncoated paper,
- wherein the packaging paper has a coating on at least one side, which comprises a vegetable oil encapsulated in a polymer, talc and a binder, and
- wherein both sides of the finished packaging paper have a Cobb 60 value of 14 g/m² to 22 g/m².

2. Packaging paper for food according to claim 1, in which said basis weight is at least 25 g/m², preferably at least 27 g/m², and/or
in which said basis weight is at most 37 g/m², preferably at most 35 g/m², and/or
in which said Cobb 60 value is at least 16 g/m² and/or at most 20 g/m².

3. Packaging paper for food according to one of the preceding claims, in which the polymer contains a maleimide group and is preferably formed by a copolymer with maleimide groups, in particular a copolymer of styrene and maleic anhydride derivatives.

4. Packaging paper for food according to one of the preceding claims, in which the Bendtsen air permeability is at most 20 ml/min and/or at least 3 ml/min, and/or which has, in at least one direction, a permeability for water vapor in accordance with ISO 2528 of at least 200 g/(m² × 24 h) and/or of at most 800 g/(m² × 24 h), wherein the direction preferably corresponds to a transport of water vapor from one side which faces the food when the food is packaged to the outside of the packaging.

5. Packaging paper for food according to one of the preceding claims, wherein the opacity in accordance with ISO 2471:2008 is at least 50%, preferably at least 60% and/or at most 90%, preferably at most 80% and particularly preferably at most 70%, and/or
in which the whiteness in accordance with ISO 2470-1:2009 of the side facing away from the food during use and/or of a side to be printed is at least 70%, preferably at least 80% and/or at most 95%, preferably at most 90% and particularly preferably at most 85%.

6. Packaging paper for food according to one of the preceding claims, in which the base paper has a pulp content of at least 60% by weight, preferably of at least 80% by weight and particularly preferably of at least 90% by weight, with respect to the mass of the base paper, whereby the content preferably does not exceed 95% by weight with respect to the mass of the base paper.

7. Packaging paper for food according to claim 6,
in which the Schopper-Riegler degree of refining of the pulp is at least 50°, preferably at least 55° and particularly preferably at least 60° and/or at most 80°, preferably at most 75° and particularly preferably at most 70°.

8. Packaging paper for food according to one of the preceding claims, in which the base paper contains a filler, the content of which is less than 15% by weight, preferably less than 10% by weight, each with respect to the weight of the base paper, and/or at least 2% by weight, preferably at least 5% by weight, with respect to the weight of the base paper, and/or
in which the filler comprises talc, kaolin, titanium dioxide or a mixture thereof, and/or
in which the coating makes up a proportion of the basis weight of the packaging paper which is at least 0.5 g/m², preferably at least 1 g/m² and particularly preferably at least 2 g/m², and/or at most 12 g/m², preferably at most 8 g/m², particularly preferably at most 6 g/m² and in particular at most 5 g/m².

9. Packaging paper for food according to one of the preceding claims, in which both sides of the base paper are coated with said coating, or
only the felt side of the base paper is coated with said coating, or
only the wire side of the paper is coated with said coating and the felt side of the paper is printed.

10. Packaging paper for food according to one of the preceding claims, in which the base paper is coated with said coating on only one side and the other side is coated with starch,
wherein the amount of starch is preferably at least 0.5 g/m² and/or at most 4 g/m².

11. Packaging paper for food according to one of the preceding claims, in which said vegetable oil at least partially contains sunflower oil, soybean oil, palm oil or rapeseed oil, in particular a mixture of sunflower oil and soybean oil, preferably in a mass ratio of about 1:1.

12. Packaging paper for food according to one of the preceding claims, in which the binder for the coating material contains a starch, a starch derivative, a cellulose derivative or a polymer, in particular polyvinyl alcohol or polystyrene acrylate.

13. Packaging paper for food according to one of the preceding claims, in which the coating material further contains a filler which contains a silicate, a carbonate, an oxide, in particular calcium carbonate, especially precipitated calcium carbonate, aluminum hydroxide, kaolin, titanium dioxide or a combination thereof,
wherein the filler comprises preferably a mixture of talc, titanium dioxide and kaolin, wherein the proportion of talc exceeds that of titanium dioxide and kaolin, and/or
in which the proportion of talc comprises at least 5% by weight, preferably at least 10% by weight and/or at most 30% by weight, preferably at most 25% by weight with respect to the mass of coating material.

14. Packaging paper for food according to one of the preceding claims,
in which the coating material consists of at least 50% by weight, preferably at least 60% by weight and particularly preferably at least 70% by weight of materials of biological origin.

15. Use of a packaging paper according to one of the preceding claims for packaging hot or cold fast food, in particular sandwiches, hamburgers, doner kebabs or burritos.

## Revendications

1. Papier d'emballage pour produits alimentaires
- avec un grammage entre 20 g/m² et 40 g/m² et
- avec une part de charge, qui est inférieure à 20 % en poids par rapport au poids du papier non revêtu,
- dans lequel le papier d'emballage comprend, au moins sur un côté, un revêtement qui comprend une huile végétale encapsulée dans un polymère, du talc et un liant et
- dans lequel les deux côtés du papier d'emballage fini présentent une valeur Cobb 60 de 14 g/m² à 22 g/m².

2. Papier d'emballage pour produits alimentaires selon la revendication 1, dans lequel le gramme mentionné est de 25 g/m² minimum, de préférence de 27 g/m² minimum et/ou
dans lequel le grammage mentionné est de 37 g/m² maximum, de préférence de 35 g/m² maximum et/ou
dans lequel la valeur Cobb 60 mentionnée est de 16 g/m² minimum et/ou de 20 g/m² maximum.

3. Papier d'emballage pour produits alimentaires selon l'une des revendications précédentes, dans lequel le polymère contient un groupe maléimide et de préférence est constitué d'un copolymère avec des groupes maléimides, plus particulièrement un copolymère de styrène et de dérivés d'anhydride maléique.

4. Papier d'emballage pour produits alimentaires selon l'une des revendications précédentes, dans lequel la perméabilité à l'air selon bendtsen est de 20 ml/min maximum et/ou de 3 ml/min minimum et/ou
qui présente, au moins dans une direction, une perméabilité à la vapeur d'eau selon ISO 2528 de 200 g/(m²×24h) minimum et/ou de 800 g/(m²×24h) maximum,
dans lequel la direction correspond de préférence à un transport de la vapeur d'eau d'un côté qui est orienté vers le produit alimentaire dans le cas d'un produit alimentaire emballé, vers le côté extérieur de l'emballage.

5. Papier d'emballage pour produits alimentaires selon l'une des revendications précédentes, dont d'opacité selon ISO 2471:2008 est de 50 % minimum, de préférence de 60 % minimum et/ou de 90 % maximum, de préférence 80 % maximum et plus particulièrement de préférence de 70 % maximum et/ou
dans lequel la blancheur selon ISO 2470-1:2009 du côté opposé au produit alimentaire lors de l'utilisation et/ou d'un côté à imprimer est de 70 % minimum, de préférence de 80 % minimum et/ou de 95 % maximum, de préférence de 90 % maximum et plus particulièrement de préférence de 85 % maximum.

6. Papier d'emballage pour produits alimentaires selon l'une des revendications précédentes, dont le papier de base présente une part de cellulose de 60 % en poids minimum, de préférence de 80 % en poids minimum et plus particulièrement de préférence de 90 % en poids maximum, par rapport à la masse du papier de base, dans lequel la part ne dépasse pas de préférence 95 % en poids, par rapport à la masse du papier de base.

7. Papier d'emballage pour produits alimentaires selon la revendication 6, dans lequel le degré de raffinage de la cellulose selon Schopper-Riegler est de 50° minimum, de préférence de 55° minimum et plus particulièrement de préférence de 60° minimum et/ou de 80° maximum, de préférence de 75° maximum et plus particulièrement de préférence de 70° maximum.

8. Papier d'emballage pour produits alimentaires selon l'une des revendications précédentes, dans lequel le papier de base contient une charge dont la part est inférieure à 15 % en poids, de préférence inférieure à 10 % en poids, par rapport au poids du papier de base et/ou de 2 % en poids minimum, de préférence de 5 % en poids minimum, par rapport au poids du papier de base et
dans lequel la charge comprend du talc, du kaolin, de l'oxyde de titane ou un mélange de ceux-ci et/ou
dans lequel le revêtement constitue une part du grammage du papier d'emballage qui est de 0,5 g/m² minimum, de préférence de 1 g/m² minimum et plus particulièrement de préférence de 2 g/m² minimum et/ou de 12 g/m² maximum, de préférence de 8 g/m² maximum, plus particulièrement de préférence de 6 g/m² maximum et plus particulièrement de 5 g/m² maximum.

9. Papier d'emballage pour produits alimentaires selon l'une des revendications précédentes, dans lequel les deux côtés du papier de base sont revêtus avec le revêtement mentionné ou
seul le côté supérieur du papier de base est revêtu avec le revêtement mentionné ou seul le côté toile du papier est revêtu avec le revêtement mentionné et le côté supérieur du papier est imprimé.

10. Papier d'emballage pour produits alimentaires selon l'une des revendications précédentes, dans lequel le papier de base est revêtu uniquement sur un côté avec le revêtement mentionné et l'autre côté est revêtu avec de l'amidon,
dans lequel la quantité d'amidon est de préférence de 0,5 g/m² minimum et/ou de 4 g/m² maximum.

11. Papier d'emballage pour produits alimentaires selon l'une des revendications précédentes, dans lequel l'huile végétale mentionnée contient au moins en partie de l'huile de tournesol, de l'huile de soja, de l'huile de palme ou de l'huile de colza, plus particulièrement un mélange d'huile de tournesol et d'huile de soja, de préférence avec un rapport de masse d'environ 1:1.

12. Papier d'emballage pour produits alimentaires selon l'une des revendications précédentes, dans lequel le liant du matériau de revêtement contient un amidon, un dérivé d'amidon, un dérivé de cellulose ou un polymère, plus particulièrement un alcool polyvinylique ou un acrylate de polystyrène.

13. Papier d'emballage pour produits alimentaires selon l'une des revendications précédentes, dans lequel le matériau de revêtement contient en outre une charge qui contient un silicate, un carbonate, un oxyde, plus particulièrement du carbonate de calcium, un carbonate de calcium spécialement précipité, de l'hydroxyde d'aluminium, du kaolin, du dioxyde de titane ou des combinaisons de ceux-ci,
dans lequel la charge comprend de préférence un mélange de talc, de dioxyde de titane et de kaolin, dans lequel la part de talc excède celles du dioxyde de titane et du kaolin et/ou
dans lequel la part de talc est de 5 % en poids minimum, de préférence de 10 % en poids minimum et/ou de 30 % en poids maximum, de préférence de 25 % en poids maximum, par rapport à la masse du matériau de revêtement.

14. Papier d'emballage pour produits alimentaires selon l'une des revendications précédentes, dans lequel le matériau de revêtement est constitué de 50 % en poids minimum, de préférence de 60 % en poids minimum et plus particulièrement de préférence de 70 % en poids minimum d'un matériau d'origine biologique.

15. Utilisation d'un papier d'emballage selon l'une des revendications précédentes, pour l'emballage d'un fast-food rapide chaude ou froide, plus particulièrement de sandwichs, de hamburgers, de kebabs ou de burritos.
